(19) Europäisches Patentamt
European Patent Office
Office européen des brevets

(11) **EP 4 202 805 A1**

(12) **EUROPEAN PATENT APPLICATION**

(43) Date of publication:
**28.06.2023 Bulletin 2023/26**

(21) Application number: **22210764.1**

(22) Date of filing: **01.12.2022**

(51) International Patent Classification (IPC):
**G06N 20/00** (2019.01)     **G06N 5/045** (2023.01)

(52) Cooperative Patent Classification (CPC):
**G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021   JP 2021208217**

(71) Applicants:
• **FUJITSU LIMITED**
**Kawasaki-shi, Kanagawa 211-8588 (JP)**
• **OSAKA UNIVERSITY**
**Suita-shi**
**Osaka 565-0871 (JP)**

(72) Inventors:
• **Suzuki, Hirofumi**
**Kawasaki-shi, Kanagawa, 211-8588 (JP)**
• **Goto, Keisuke**
**Kawasaki-shi, Kanagawa, 211-8588 (JP)**
• **Iwashita, Hiroaki**
**Kawasaki-shi, Kanagawa, 211-8588 (JP)**
• **Takagi, Takuya**
**Kawasaki-shi, Kanagawa, 211-8588 (JP)**
• **Ohori, Kotaro**
**Kawasaki-shi, Kanagawa, 211-8588 (JP)**
• **Hara, Satoshi**
**Suita-shi, Osaka 565-0871 (JP)**

(74) Representative: **Hoffmann Eitle**
**Patent- und Rechtsanwälte PartmbB**
**Arabellastraße 30**
**81925 München (DE)**

(54)   **INFORMATION PROCESSING PROGRAM, INFORMATION PROCESSING DEVICE, AND INFORMATION PROCESSING METHOD**

(57)   An information processing program causes a computer(10) to execute a process including, deciding on one or more variables, from among a plurality of variables, to be a target for a question regarding degree of importance, based on order of priority of the variables and estimated amount, the order of priority of the variables being determined based on a plurality of patterns indicating ranking of the plurality of variables, the estimated amount indicating possibility of a match with predetermined condition regarding each of the patterns, (S103) and updating the estimated amount based on an answer result of the question about the decided variable.(S105,S106)

FIG.1

**Description**

FIELD

The embodiments discussed herein are related to an information processing technology.

BACKGROUND

With the popularization of the artificial intelligence (AI) technology, there has been an increase in the demand for a machine learning model that is capable of providing explanation, because of the fact that the determination of a black-box-type machine learning model cannot be accepted without questioning and because of the wish that the premise for a human-interpretable determination is presented. Hence, a white box model such as a rule list, a decision tree, or a linear model is used in advance. However, merely using a white-box-type machine learning model does not ensure that the machine learning model is human-interpretable or is capable of providing explanation.

Hence, in recent years, an interactive approach has been implemented by which the generation of a machine learning model and the feedback to a person is carried out repeatedly, so that an accurate machine learning model is generated that is acceptable to a person. In the interactive approach, for example, a feature is selected from among the features that are believed to be an important feature in the machine learning model; the user is asked whether the selected feature is truly important; and the questioning is repeated for each such feature until the user is satisfied. Meanwhile, the features in the machine learning model are also called explanatory variables or are simply called variables.

Subsequently, according to the feedback, the parameters used at the time of optimizing the machine learning model are changed, and thus the machine learning model is updated. As a result of repeatedly performing such operations, an accurate machine learning model is generated that is acceptable to a person.

A machine learning model has a large number of features. Thus, by taking into account the possibility that the user discontinues the interaction midway, it is desirable that the maximum possible number of features answered as important features are obtained with as few questions as possible.

In that regard, some methods are available, such as a method in which the questioning is performed in order of the features having a large value calculated using the available statistic such as correlation, mutual information content, and chi-square value; or a method in which the impact on the predicted distribution with respect to each feature of the machine learning model is measured, and the features having a relatively larger impact are selected for the questioning purpose.

[Patent Literature 1] Japanese National Publication of International Patent Application No. 2016-536691
[Patent Literature 2] Japanese Laid-open Patent Publication No. 2017-220238
[Patent Literature 3] U. S. Unexamined Patent Application Publication No. 2018/0336271
[Patent Literature 4] U. S. Unexamined Patent Application Publication No. 2019/0188585
[Patent Literature 5] Japanese Laid-open Patent Publication No. 2019-169147

However, a particular statistic is not necessarily consistent with the on-the spot knowledge that is satisfactory to the user, and there are times when a large number of questions need to be asked until the user is satisfied. Moreover, also in the case in which the features are selected by the machine learning model, even though the selection is dependent on a particular index of questions in the machine learning model, that index is not necessarily consistent with the on-the spot knowledge of the user. Hence, eventually, there are times when the number of questions becomes large.

Accordingly, it is an object in one aspect of an embodiment of the present invention to provide an information processing program, an information processing device, and an information processing method capable of selecting, in a more efficient manner, the feature that is consistent with the on-the spot knowledge of the user in order to generate a machine learning model capable of providing explanation.

SUMMARY

According to an aspect of an embodiment, an information processing program causes a computer to execute a process including, deciding on one or more variables, from among a plurality of variables, to be a target for a question regarding degree of importance, based on order of priority of the variables and estimated amount, the order of priority of the variables being determined based on a plurality of patterns indicating ranking of the plurality of variables, the estimated amount indicating possibility of a match with predetermined condition regarding each of the patterns, and updating the estimated amount based on an answer result of the question about the decided variable.

BRIEF DESCRIPTION OF DRAWINGS

FIG. 1 is a block diagram illustrating an exemplary configuration of an information processing device according to an embodiment;
FIG. 2 is a diagram illustrating an example of index data according to the present embodiment;
FIG. 3 is a diagram illustrating an example of probability data according to the present embodiment;
FIG. 4 is a diagram illustrating an example of a feature selection operation corresponding to the first round of questioning according to the present embodiment;
FIG. 5 is a diagram illustrating an example of the feature selection operation corresponding to the second round of questioning according to the present embodiment;
FIG. 6 is a diagram illustrating an example of the feature selection operation corresponding to the third round of questioning according to the present embodiment;
FIG. 7 is a flowchart for explaining an exemplary flow of an estimated-amount updating operation according to the present embodiment; and
FIG. 8 is a diagram illustrating an exemplary hardware configuration of the information processing device according to the present embodiment.

DESCRIPTION OF EMBODIMENT

Preferred embodiments of the present invention will be explained with reference to accompanying drawings. However, the present invention is not limited by the embodiment described below. Meanwhile, it is possible to combine embodiments without causing contradictions.

Functional configuration of information processing device 10

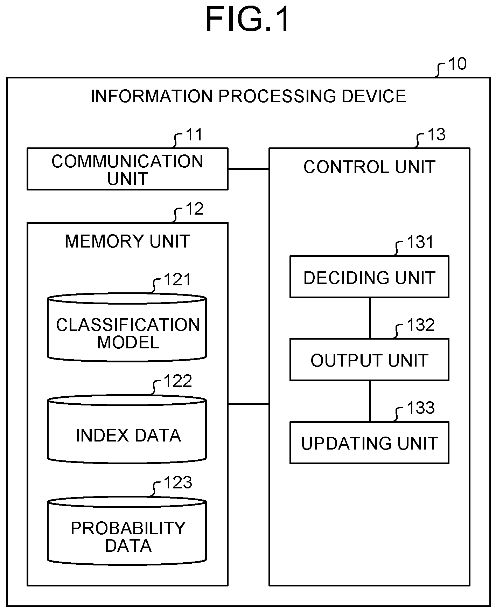

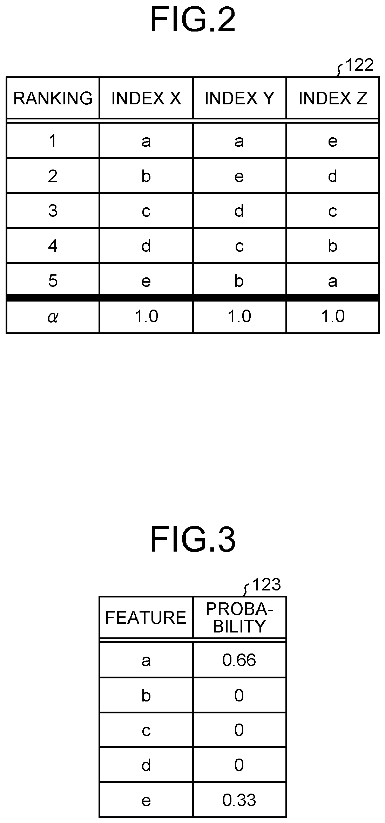

Explained below with reference to FIG. 1 is a functional configuration of an information processing device 10 according to the present embodiment. FIG. 1 is a block diagram illustrating an exemplary configuration of the information processing device 10. As illustrated in FIG. 1, the information processing device 10 includes a communication unit 11, a memory unit 12, and a control unit 13.
The communication unit 11 is a processing unit that controls the communication performed with other information processing devices.
The memory unit 12 is a memory device used to store a variety of data and to store computer programs to be executed by the control unit 13. The memory unit 12 is used to store a classification model 121, index data 122, and probability data 123.
The classification model 121 is a machine learning model that, for example, classifies input data into one of two values. For example, when an image in which a person is captured is input, the classification model 121 determines whether or not the person is wearing a uniform, and outputs the determination result indicating whether or not the person is wearing a uniform.
The index data 122 is related to the indexes that represent the patterns indicating the ranking of the features, that is, the order of priority of the features in a machine learning model. FIG. 2 is a diagram illustrating an example of the index data 122 according to the present embodiment. In the example illustrated in FIG. 2, three indexes X, Y, and Z are included in the index data 122, and five features "a" to "e" are listed in each index according to their ranking.
In the example illustrated in FIG. 2, in the case of the index X, the feature "a" is believed to the most important feature in the machine learning model. Hence, firstly, the user is asked whether or not the feature "a" is an important feature. Then, in the case of the index X, the user is asked whether or not the feature "b" is an important feature that is believed to be the second most important feature. In this way, until the user is satisfied, the questions about the features are repeatedly asked based on the order of priority of the features. In the example illustrated in FIG. 2, for the sake of convenience, a total of five features "a" to "e" are illustrated. However, in practice, a machine learning model includes a much larger number of features, such as few hundred features or few thousand features.
Meanwhile, an estimated amount $\alpha$ represents the weight coefficient of each index, and has the initial value set to 1.0. The information processing device 10 questions the user about the importance of each feature, and updates the estimated amount $\alpha$ based on the answer to each question. Thus, although the details are explained later, the information processing device 10 treats an index in which the important features are ranked high as the index that is more consistent with the on-the spot knowledge. Hence, the features can be more easily selected from that index.
Each index in the index data 122 is generated by ranking the features using the statistic such as correlation, mutual information content, and chi-square value or using an existing technology such as the predicted distribution with respect to each feature of the machine learning model.

The probability data 123 is related to the probability at which the user is estimated to comply regarding each feature. That is, the probability data 123 is related to the feature-by-feature probability at which the concerned feature is estimated to be an important feature and at which an affirmative answer (Yes) is estimated to be obtained from the user to the question about whether or not the concerned feature is an important feature. In the example illustrated in FIG. 3, regarding the probability at which an affirmative answer is obtained from the user, the feature "a" has the probability of 0.66% and the feature "e" has the probability of 0.33%. For that reason, in the probability data 123 illustrated in the example in FIG. 3, asking the user about whether or not the feature "a" is an important feature is a more efficient way of obtaining the maximum possible number of important features with as few questions as possible. Herein, for each question, the probability data 123 is generated based on the index data 122. Regarding the method for generating the probability data 123 and the details about selecting a feature about which the user is to be questioned, the explanation is given later.

Meanwhile, the abovementioned data stored in the memory unit 12 is only exemplary, and a variety of data other than the abovementioned data can also be stored in the memory unit 12.

The control unit 13 is a processing unit that controls the information processing device 10 in entirety; and includes a deciding unit 131, an output unit 132, and an updating unit 133.

The deciding unit 131 selects and decides on the target feature for questioning the degree of importance based on: the order of priority of the features in the machine learning model as based on the index data 122; and based on the estimated amount $\alpha$ indicating the possibility of a match with a predetermined condition regarding each set of index data 122.

For example, the deciding unit 131 decides on the target feature for questioning based on: the order of priority of the features decided on the basis of the statistic indicating at least one of the correlation, the mutual information content, and the chi-square value with respect to the features of the machine learning model; and based on the estimated amount $\alpha$. Meanwhile, the features in a machine learning model are equivalent to the variables in the machine learning model, and the index data 122 is equivalent to a plurality of patterns indicating the ranking of a plurality of variables.

The output unit 132 outputs a question about the degree of importance of the feature that is decided by the deciding unit 131. For example, the output unit 132 outputs a question via an output device such as a display device connected to the information processing device 10. Alternatively, the output unit 132 can output a question to an information processing terminal (not illustrated) that is communicably connected via a network.

The updating unit 133 obtains the answer to the question about the degree of importance as output by the output unit 132, and updates the estimated amount $\alpha$ based on the answer.

For example, if the answer to the question about the degree of importance indicates that the feature decided by the deciding unit 131 is an important feature, then the updating unit 133 increases the estimated amount $\alpha$ of the index data 122 in which the order of priority of the concerned feature is equal to or higher than a predetermined threshold value. On the other hand, if the answer to the question about the degree of importance indicates that the feature decided by the deciding unit 131 is not an important feature, then the updating unit 133 increases the estimated amount $\alpha$ of the index data 122 in which the order of priority of the concerned feature is not equal to or higher than the predetermined threshold value. Herein, the predetermined threshold value is, for example, the value indicating the second rank from the top.

Details of functions

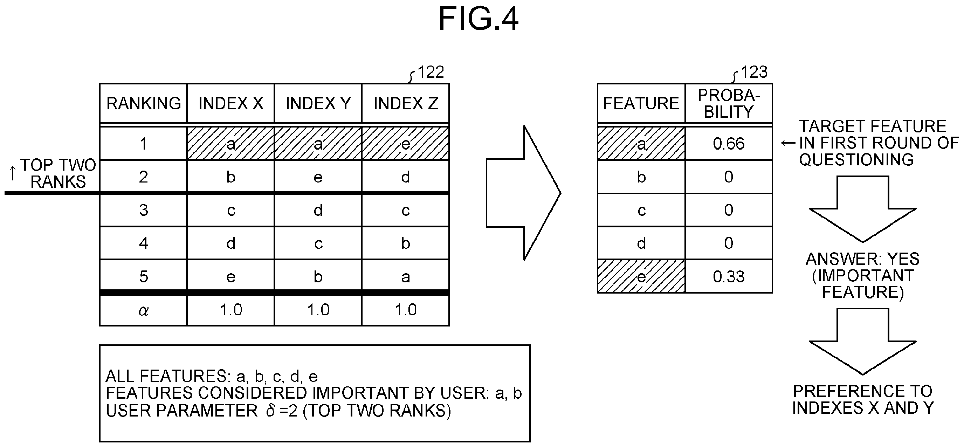

With reference to FIGS. 4 to 6, given below is the detailed explanation of a feature deciding operation performed in the information processing device 10 for deciding the feature for which the degree of importance is to be asked. FIG. 4 is a diagram illustrating an example of a feature selection operation corresponding to the first round of questioning according to the present embodiment. In the example illustrated in FIG. 4, the explanation is given about the operation in which, in order to ask a question for the first time to the user about the degree of importance, the target feature for questioning is selected and decided based on the index data 122.

Firstly, as the prerequisite, the total number of features in the machine learning model is assumed to be five, namely, the features "a" to "e". Moreover, it is assumed that the two features "a" and "b" are considered important by the user but are not known to be an important feature to the information processing device 10, that is, are not set or stored in advance in the information processing device 10. Furthermore, although explained in detail later, it is assumed that a user parameter $\delta$ that is used at the time of deciding the updating details of the estimated volume $\alpha$ is equal to two (ranked second from the top). For example, the user parameter $\delta$ can be decided based on a predetermined ratio of the total number of features, and can be stored in the information processing device 10. Alternatively, the user parameter $\delta$ can be set to an arbitrary value by the user.

Regarding the feature deciding operation, as illustrated on the left side in FIG. 4, the information processing device 10 extracts the first-ranked feature in each index of the index data 122 as a candidate for the first round of questioning. In the example illustrated in FIG. 4, the features "a", "a", and "e" are extracted from the indexes X, Y, and Z, respectively.

Subsequently, as illustrated on the right side in FIG. 4, the information processing device 10 calculates the probability of each extracted feature, and generates the probability data 123 meant for deciding the target feature for the first round of questioning. Each probability in the probability data 123 represents the probability of getting an affirmative answer from the user to the question about the degree of importance. Each probability is the combined total of the feature-by-feature probabilities calculated based on the estimated amount $\alpha$ for each index.

For example, if there are three indexes "X", "Y", and "Z" that are referred to as the first index, the second index, and the third index, respectively; then the probability of the i-th index is calculated using Equation (1) given below.

$$\frac{\alpha_j}{\sum_j \alpha_j} \qquad (1)$$

In Equation (1), $\Sigma_j \alpha_j$ represents the combined total of the estimated amounts $\alpha$ of all indexes. In the example illustrated in FIG. 4, $\Sigma_j \alpha_j$ is equal to 1.0+1.0+1.0=3.0.

The information processing device 10 calculates the probability of each index using Equation (1) and adds the feature-by-feature probabilities to obtain the probability of each feature as illustrated on the right side in FIG. 4. For example, in the example illustrated in FIG. 4, since the feature "a" is extracted from the two indexes "X" and "Y", the probability of the feature "a" is equal to (the probability of the index X)+(the probability of the index Y)=(1.0/3.0)+(1.0/3.0)=approximately 0.66. In an identical manner, the probability of the feature "e" is equal to (the probability of the index X)=(1.0/3.0)=approximately 0.33. Meanwhile, since the features "b" to "d" are not extracted as the candidates for the first round of questioning, the respective probabilities are equal to zero.

Subsequently, the information processing device 10 selects and decides on the feature "a", which has the highest probability, as the target feature for the first round of questioning. Then, the information processing device 10 outputs, as the first round of questioning, a question to the user about whether or not the feature "a" is an important feature. Since the user considers the feature "a" to be an important feature, an affirmative answer (important feature) is obtained from the user in response to the question.

Since it becomes clear that the feature "a" is an important feature, the information processing device 10 updates the estimation amount $\alpha$ in such a way that the indexes X and Y, which include the feature "a" within the top two ranks as indicated by "2" in the example illustrated in FIG. 4, are given preference. More particularly, the information processing device 10 updates the estimated amount $\alpha$ of the indexes X and Y from 1.0 to 1.15, for example. Herein, the amount of increase in the estimated amount $\alpha$ can be based on, for example, the number of preferred indexes and a preset value. Meanwhile, the fact that the ranking is within a predetermined ranking from the top as indicated by the value set in the user parameter $\delta$ is equivalent to the fact that the ranking of the features, that is, the order of priority of the features in the machine learning model is equal to or higher than a threshold value.

Moreover, the information processing device 10 can update the estimated amount $\alpha$ of the index Z, which does not include the important feature "a" within the top two ranks, from 1.0 to 0.85, for example. That makes it easier to select the target feature for questioning from among the indexes X and Y that include the important feature in the top ranks. Meanwhile, the amount of decrease in the estimation amount $\alpha$ can also be based on, for example, a preset value.

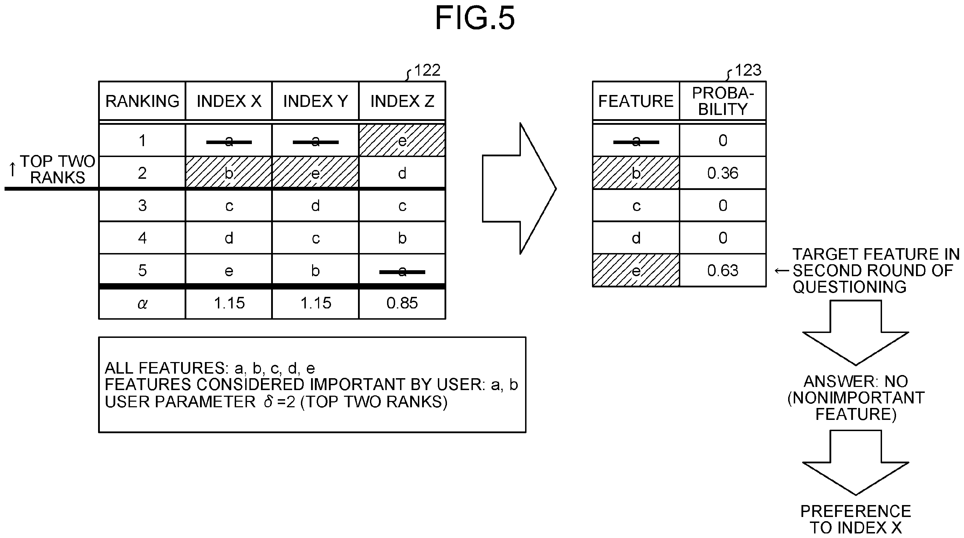

Given below is the explanation of the feature selection operation corresponding to the second round of questioning according to the present embodiment. FIG. 5 is a diagram illustrating an example of the feature selection operation corresponding to the second round of questioning according to the present embodiment. The example illustrated in FIG. 5 is related to the second round of questioning performed after the first round of questioning to the user is over and after the estimated amount $\alpha$ of each index has been updated based on the answer, as explained above with reference to FIG. 4.

Firstly, as illustrated on the left side in FIG. 5, the information processing device 10 extracts, from among the features of each index of the index data 122, the highest-ranked feature not yet treated as the target for questioning as a candidate for the second round of questioning. As explained with reference to FIG. 4, the feature "a" was decided as the target feature in the first round of questioning. Hence, in the example illustrated in FIG. 5, the features "b", "e", and "e" are extracted from the indexes X, Y, and Z, respectively, as the candidate features for questioning.

Then, as illustrated on the right side in FIG. 5, the information processing device 10 calculates the probability of each extracted feature. In the example illustrated in FIG. 5, since the feature "e" is extracted from the two indexes "Y" and "Z", the probability of the feature "e" is equal to (the probability of the index Y)+(the probability of the index Z)=(1.15/3.15)+(0.85/3.15)=approximately 0.63. In an identical manner, the probability of the feature "b" is equal to (the probability of the index X)=(1.15/3.15)=approximately 0.36.

Then, the information processing device 10 selects and decides on the feature "e", which has the highest probability, as the target feature for the second round of questioning. Subsequently, the information processing device 10 outputs, as the second round of questioning, a question to the user about whether or not the feature "e" is an important feature. Since the user does not consider the feature "e" to be an important feature, a negative answer (non-important feature) is obtained from the user in response to the question.

Since it becomes clear that the feature "e" is not an important feature, the information processing device 10 updates the estimation amount $\alpha$ in such a way that the index X that does not include the feature "e" within the top two ranks is given preference. More particularly, the information processing device 10 updates the estimated amount $\alpha$ of the index X from 1.15 to 2.0, for example.

Moreover, the information processing device 10 can update the estimated amount $\alpha$ of the indexes Y and Z, which include the non-important feature "e" within the top two ranks, from 1.15 to 1.1 and from 0.85 to 0.8, respectively, for example.

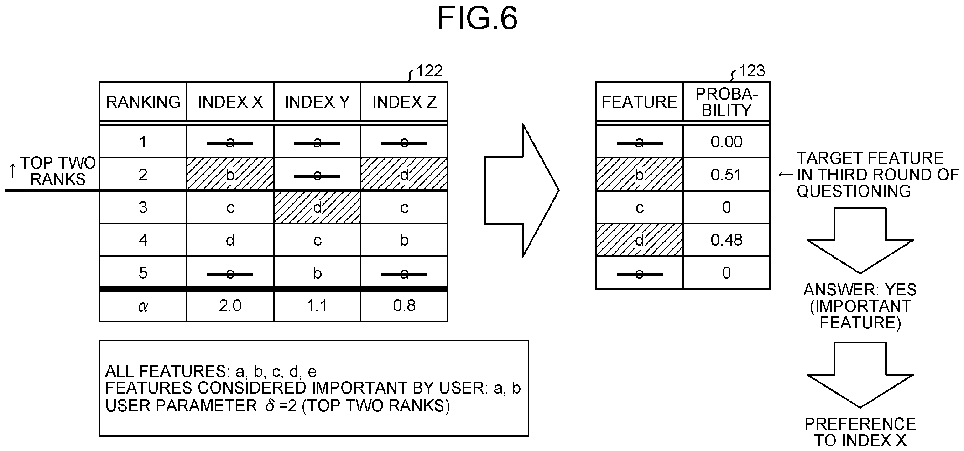

Given below is the explanation of the feature selection operation corresponding to the third round of questioning according to the present embodiment. FIG. 6 is a diagram illustrating an example of the feature selection operation corresponding to the third round of questioning according to the present embodiment. The example illustrated in FIG. 6 is related to the third round of questioning performed after the second round of questioning to the user is over and after the estimated amount $\alpha$ of each index has been updated based on the answer, as explained above with reference to FIG. 5.

Firstly, as illustrated on the left side in FIG. 6, the information processing device 10 extracts, from among the features of each index of the index data 122, the highest-ranked feature not yet treated as the target for questioning as a candidate for the third round of questioning. As explained with reference to FIGS. 4 and 5, the features "a" and "e" were decided as the target features in the first round of questioning and the second round of questioning, respectively. Hence, in the example illustrated in FIG. 6, the features "b", "d", and "d" are extracted from the indexes X, Y, and Z, respectively, as the candidate features for questioning.

Then, as illustrated on the right side in FIG. 6, the information processing device 10 calculates the probability of each extracted feature. In the example illustrated in FIG. 6, the feature "d" is extracted from the two indexes "Y" and "Z", the probability of the feature "d" is equal to (the probability of the index Y)+(the probability of the index Z)=(1.1/3.9)+(0.8/3.9)=approximately 0.48. In an identical manner, the probability of the feature "b" is equal to (the probability of the index X)=(2.0/3.9)=approximately 0.51.

Then, the information processing device 10 selects and decides on the feature "b", which has the highest probability, as the target feature for the third round of questioning. Subsequently, the information processing device 10 outputs, as the third round of questioning, a question to the user about whether or not the feature "b" is an important feature. Since the user considers the feature "b" to be an important feature, an affirmative answer (important feature) is obtained from the user in response to the question.

Since it becomes clear that the feature "b" is an important feature, the information processing device 10 updates the estimation amount $\alpha$ in such a way that the index X, which includes the feature "b" within the top two ranks, is given preference. Moreover, the information processing device 10 can reduce the estimated amount $\alpha$ of the indexes Y and Z that do not include the important feature "b" within the top two ranks.

In the example explained with reference to FIGS. 4 to 6, the information processing device 10 becomes able to recognize, in three rounds of questioning, all features that are considered important by the user. However, the information processing device 10 is not aware of the total number of features that are considered important by the user. Hence, after the third round of questioning is over, until the target features for questioning are exhausted, the information processing device 10 attempts to continue with the questioning from the fourth round onward. In that regard, for example, in the information processing device 10, the control can be performed in such a way that whether or not the user is satisfied is confirmed via a user interface and the questioning is continued until the user answers affirmatively about the satisfaction.

Flow of operations

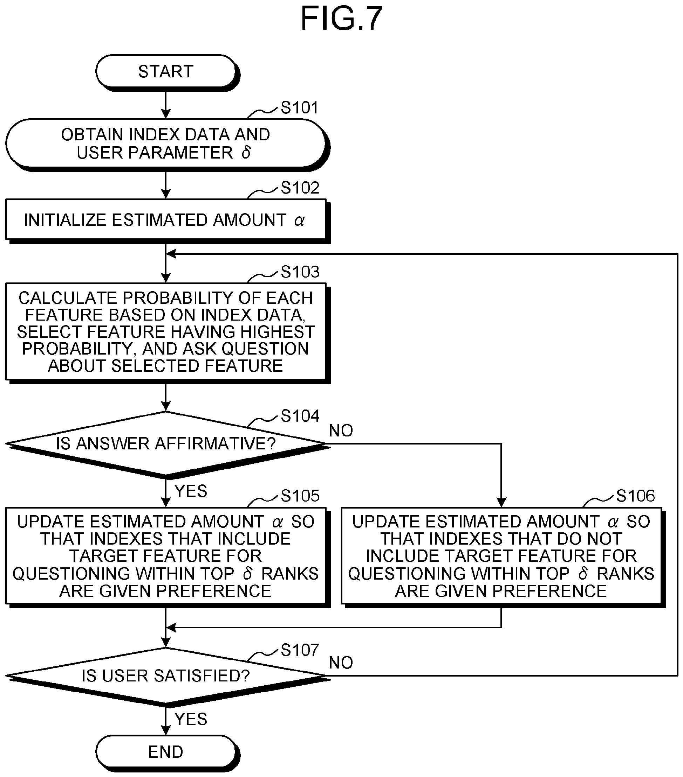

Explained below with reference to FIG. 7 is an estimated-amount updating operation performed in the information processing device 10. FIG. 7 is a flowchart for explaining an exemplary flow of the estimated-amount updating operation according to the present embodiment. The estimated-amount updating operation illustrated in FIG. 7 is started at an arbitrary timing such as in response to a user request.

Firstly, as illustrated in FIG. 7, the information processing device 10 obtains the index data 122 and the user parameter $\delta$ (Step S101). In the index data 122, the features of the target machine learning model are ranked according to an existing technology using statistic and machine learning models. The index data 122 is stored in advance in the information processing device 10. The user parameter $\delta$ either is decided based on the total number of features of the target machine learning model, or is set by the user; and is stored in advance in the information processing device 10. Thus, the index data 122 and the user parameter $\delta$ either can be generated and stored in advance, or can be generated and obtained at Step S101.

Then, the information processing device 10 initializes the estimated amount $\alpha$ in the index data 122 (Step S102). More particularly, in the initial stage, the information processing device 10 is not aware of the features considered important by the user, and is not aware about which index in the index data 122 is consistent with the on-the spot knowledge of the user. Hence, the information processing device 10 sets the estimated amount $\alpha$ of each index to 1.0 without exception. Meanwhile, the initialization of the estimated amount $\alpha$ can be performed along with the generation of the index data 122.

Subsequently, as explained earlier with reference to FIGS. 4 to 6, the information processing device 10 calculates the probability of each feature based on the index data 122; selects, as the target feature for questioning, the feature having the highest probability from among the features not yet treated as the target for questioning; and asks a question to the user about the selected feature (Step S103).

If an affirmative answer (important feature) is obtained from the user in response to the question asked at Step S103 (Yes at Step S104), then the information processing device 10 updates the estimated amount $\alpha$ in such a way that the indexes which include the target feature for questioning within the top 8 ranks are given preference (Step S105).

On the other hand, if a negative answer (non-important feature) is obtained from the user (No at Step S104), then the information processing device 10 updates the estimated amount $\alpha$ in such a way that the indexes which do not include the target feature for questioning within the top $\delta$ ranks are given preference (Step S106).

Then, the information processing device 10 confirms, via a user interface, whether or not the user is satisfied. If the answer indicates that the user is satisfied (Yes at Step S107), then the information processing device 10 ends the estimated-amount updating operation illustrated in FIG. 7.

On the other hand, if the answer indicates that the user is not satisfied (No at Step S107), then the system control returns to Step S103 and, until the user is satisfied, the information processing device 10 repeatedly asks questions about the degree of importance of the features not yet treated as the targets for questioning (Step S103 to Step S107).

Effect

As explained above, based on a plurality of priorities based on a plurality of patterns indicating the ranking of a plurality of variables and based on the estimated amount indicating the possibility of a match with a predetermined condition regarding each pattern, the information processing device 10 decides on the target variable for questioning the degree of importance and updates the estimated amount based on the answer to the question regarding the decided target variable.

In this way, based on the index and the estimated amount that indicates the possibility of a match with the on-the spot knowledge of the user, the information processing device 10 selects and decides on the target feature for questioning about the degree of importance, and updates the estimated amount based on the answer. As a result, in order to generate a machine learning model capable of providing explanation, the information processing device 10 can select, in a more efficient manner, the feature matching with the on-the spot knowledge of the user.

Meanwhile, when the answer indicates that the decided variable is important, the operation of updating the estimated amount includes increasing the estimated amount for the patterns in which the order of priority of the decided variable is equal to or higher than a predetermined threshold value.

As a result, it becomes easier for the information processing device 10 to select the feature that is consistent with the on-the spot knowledge of the user.

On the other hand, when the answer indicates that the decided variable is not important, the operation of updating the estimated amount includes increasing the estimated amount for the patterns in which the order of priority of the decided variable is not equal to or higher than the predetermined threshold value.

As a result, it becomes easier for the information processing device 10 to select the feature that is consistent with the on-the spot knowledge of the user.

The operation of deciding on the variable includes deciding on the variable based on: the order of priority of the patterns indicating the ranking decided based on the statistic indicating at least one of the correlation, the mutual information content, and the chi-square value with respect to the variables; and based on the estimated amount.

As a result, it becomes easier for the information processing device 10 to select the feature that is consistent with the on-the spot knowledge of the user.

System

The processing procedures, the control procedures, specific names, various data, and information including parameters described in the embodiments or illustrated in the drawings can be changed as required unless otherwise specified. Moreover, the specific examples, the distributions, and the numerical values explained in the working examples are only exemplary and can be arbitrarily changed.

The constituent elements of the information processing device 10 are merely conceptual, and need not be physically configured as illustrated. For example, the deciding unit 131 of the information processing device 10 can be divided into a plurality of processing units, or the deciding unit 131 and the output unit 132 of the information processing device 10 can be integrated into a single processing unit. Thus, the constituent elements, as a whole or in part, can be separated or integrated either functionally or physically based on various types of loads or use conditions. Furthermore, the process functions implemented in each device are entirely or partially implemented by a central processing unit (CPU) or by computer programs that are analyzed and executed by a CPU, or are implemented as hardware by wired logic.

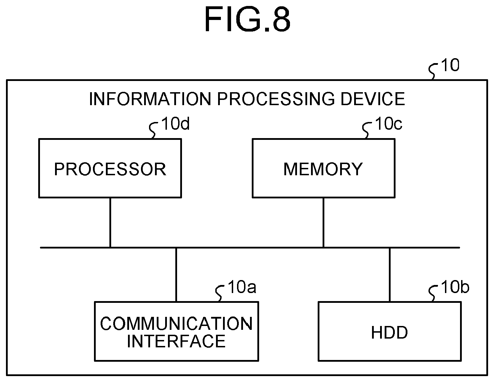

FIG. 8 is a diagram illustrating an exemplary hardware configuration of the information processing device 10 according to the present embodiment. As illustrated in FIG. 8, the information processing device 10 includes a communication interface 10a, a hard disk drive (HDD) 10b, a memory 10c, and a processor 10d. The constituent elements illustrated in FIG. 6 are connected to each other by a bus.

The communication interface 10a is a network interface card that communicates with other information processing devices. The HDD 10b is used to store a computer program meant for implementing the functions illustrated in FIG. 1, and to store data.

The processor 10d is a CPU, a micro processing unit (MPU), or a graphics processing unit (GPU). Alternatively, the processor 10d can be implemented using an integrated circuit such as an application specific integrated circuit (ASIC) or a field programmable gate array (FPGA). The processor 10d is a hardware circuit that reads a computer program, which executes operations identical to the operations of the processing units illustrated in FIG. 1; loads the computer program in the memory 10c; and executes processes for implementing the functions explained with reference to FIG. 1.

Alternatively, the information processing device 10 can read the computer program from a recording medium using a medium reading device, and execute the program so that the functions according to the embodiment can be implemented. Meanwhile, the computer program is not limited to be executed by the information processing device 10. For example, even when the computer program is executed by some other information processing device or when the computer program is executed in cooperation among devices, the embodiment can still be implemented in an identical manner.

The computer program can be distributed via a network such as the Internet. Alternatively, the computer program can be recorded in a recording medium such as a hard disk, a flexible disk (FD), a compact disc read only memory (CD-ROM), a magneto-optical (MO) disk, or a digital versatile disc (DVD) readable by an information processing device. Then, an information processing device can read the computer program from the recording medium, and execute it.

**Claims**

1. An information processing program that causes a computer(10) to execute a process comprising:

   deciding on one or more variables, from among a plurality of variables, to be a target for a question regarding degree of importance, based on order of priority of the variables and estimated amount, the order of priority of the variables being determined based on a plurality of patterns indicating ranking of the plurality of variables, the estimated amount indicating possibility of a match with predetermined condition regarding each of the patterns; (S103) and
   updating the estimated amount based on an answer result of the question about the decided variable. (S105, S106)

2. The information processing program according to claim 1, wherein the updating of the estimated amount includes, when the answer result indicates that the decided variable is important, updating to increase the estimated amount of the patterns in which the order of priority of the decided variable is equal to or higher than a predetermined threshold value. (S105)

3. The information processing program according to claim 2, wherein the updating of the estimated amount includes, when the answer result indicates that the decided variable is not important, updating to increase the estimated amount of the patterns in which the order of priority of the decided variable is not equal to or higher than the predetermined threshold value. (S106)

4. The information processing program according to any one of claims 1 to 3, wherein the deciding on the variables includes deciding on the variables, based on the order of priority based on the patterns indicating the ranking decided according to statistic representing at least one of correlation, mutual information content, and chi-square value for the variables, and the estimated amount.

5. An information processing device(10) comprising a control unit(13) configured to execute a process including:

deciding on one or more variables, from among a plurality of variables, to be a target for a question regarding degree of importance, based on order of priority of the variables and estimated amount, the order of priority of the variables being determined based on a plurality of patterns indicating ranking of the plurality of variables, the estimated amount indicating possibility of a match with predetermined condition regarding each of the patterns; (S103) and

updating the estimated amount based on an answer result of the question about the decided variable. (S105, S106)

6. The information processing device(10) according to claim 5, wherein the updating of the estimated amount includes, when the answer result indicates that the decided variable is important, updating to increase the estimated amount of the patterns in which the order of priority of the decided variable is equal to or higher than a predetermined threshold value. (S105)

7. The information processing device(10) according to claim 6, wherein the updating of the estimated amount includes, when the answer result indicates that the decided variable is not important, updating to increase the estimated amount of the patterns in which the order of priority of the decided variable is not equal to or higher than the predetermined threshold value. (S106)

8. The information processing device(10) according to any one of claims 5 to 7, wherein the deciding on the variables includes deciding on the variables, based on the order of priority based on the patterns indicating the ranking decided according to statistic representing at least one of correlation, mutual information content, and chi-square value for the variables, and the estimated amount.

9. An information processing method comprising:

deciding on one or more variables, from among a plurality of variables, to be a target for a question regarding degree of importance, based on order of priority of the variables and estimated amount, the order of priority of the variables being determined based on a plurality of patterns indicating ranking of the plurality of variables, the estimated amount indicating possibility of a match with predetermined condition regarding each of the patterns; (S103) and

updating the estimated amount based on an answer result of the question about the decided variable. (S105, S106)

10. The information processing method according to claim 9, wherein the updating of the estimated amount includes, when the answer result indicates that the decided variable is important, updating to increase the estimated amount of the patterns in which the order of priority of the decided variable is equal to or higher than a predetermined threshold value. (S105)

11. The information processing method according to claim 10, wherein the updating of the estimated amount includes, when the answer result indicates that the decided variable is not important, updating to increase the estimated amount of the patterns in which the order of priority of the decided variable is not equal to or higher than the predetermined threshold value.(S106)

12. The information processing method according to any one of claims 9 to 11, wherein the deciding on the variables includes deciding on the variables, based on the order of priority based on the patterns indicating the ranking decided according to statistic representing at least one of correlation, mutual information content, and chi-square value for the variables, and the estimated amount.

# FIG.1

# FIG.2

122

| RANKING | INDEX X | INDEX Y | INDEX Z |
|---------|---------|---------|---------|
| 1 | a | a | e |
| 2 | b | e | d |
| 3 | c | d | c |
| 4 | d | c | b |
| 5 | e | b | a |
| $\alpha$ | 1.0 | 1.0 | 1.0 |

# FIG.3

123

| FEATURE | PROBA-BILITY |
|---------|--------------|
| a | 0.66 |
| b | 0 |
| c | 0 |
| d | 0 |
| e | 0.33 |

# FIG.4

EP 4 202 805 A1

| RANKING | INDEX X | INDEX Y | INDEX Z |
|---------|---------|---------|---------|
| 1 | a | a | e |
| 2 | b | e | d |
| 3 | c | d | c |
| 4 | d | c | b |
| 5 | e | b | a |
| $\alpha$ | 1.0 | 1.0 | 1.0 |

↑ TOP TWO RANKS

122

| FEATURE | PROBA-BILITY |
|---------|--------------|
| a | 0.66 |
| b | 0 |
| c | 0 |
| d | 0 |
| e | 0.33 |

123

ALL FEATURES: a, b, c, d, e
FEATURES CONSIDERED IMPORTANT BY USER: a, b
USER PARAMETER $\delta$ =2 (TOP TWO RANKS)

TARGET FEATURE
← IN FIRST ROUND OF QUESTIONING

ANSWER: YES
(IMPORTANT FEATURE)

PREFERENCE TO INDEXES X AND Y

# FIG.5

| RANKING | INDEX X | INDEX Y | INDEX Z |
|---------|---------|---------|---------|
| 1 | a | a | e |
| 2 | b | e | d |
| 3 | c | d | c |
| 4 | d | c | b |
| 5 | e | b | a |
| $\alpha$ | 1.15 | 1.15 | 0.85 |

↑ TOP TWO RANKS (122)

ALL FEATURES: a, b, c, d, e
FEATURES CONSIDERED IMPORTANT BY USER: a, b
USER PARAMETER $\delta = 2$ (TOP TWO RANKS)

| FEATURE | PROBA-BILITY |
|---------|--------------|
| a | 0 |
| b | 0.36 |
| c | 0 |
| d | 0 |
| e | 0.63 |

(123)

← TARGET FEATURE IN SECOND ROUND OF QUESTIONING

ANSWER: NO (NONIMPORTANT FEATURE)

PREFERENCE TO INDEX X

EP 4 202 805 A1

# FIG.6

Table 122:

| RANKING | INDEX X | INDEX Y | INDEX Z |
|---|---|---|---|
| 1 | a | a | a |
| 2 | b | a | d |
| 3 | c | d | c |
| 4 | d | c | b |
| 5 | a | b | a |
| α | 2.0 | 1.1 | 0.8 |

↑ TOP TWO RANKS

ALL FEATURES: a, b, c, d, e
FEATURES CONSIDERED IMPORTANT BY USER: a, b
USER PARAMETER δ =2 (TOP TWO RANKS)

Table 123:

| FEATURE | PROBA-BILITY |
|---|---|
| a | 0.00 |
| b | 0.51 |
| c | 0 |
| d | 0.48 |
| a | 0 |

TARGET FEATURE → IN THIRD ROUND OF QUESTIONING

ANSWER: YES (IMPORTANT FEATURE)

PREFERENCE TO INDEX X

# FIG.7

```
            ┌──────────────┐
            │    START     │
            └──────┬───────┘
                   │            ⌒S101
         ┌─────────▼──────────────┐
         │  OBTAIN INDEX DATA AND  │
         │   USER PARAMETER δ      │
         └─────────┬──────────────┘
                   │            ⌒S102
         ┌─────────▼──────────────┐
         │ INITIALIZE ESTIMATED    │
         │      AMOUNT α           │
         └─────────┬──────────────┘
                   │            ⌒S103
         ┌─────────▼──────────────┐
         │ CALCULATE PROBABILITY   │
         │ OF EACH FEATURE BASED   │
         │ ON INDEX DATA, SELECT   │
         │ FEATURE HAVING HIGHEST  │
         │ PROBABILITY, AND ASK    │
         │ QUESTION ABOUT          │
         │ SELECTED FEATURE        │
         └─────────┬──────────────┘
                   │    ⌒S104
              ◇────▼────◇   NO
         IS ANSWER AFFIRMATIVE? ───────┐
              ◇─────────◇              │
                   │ YES               │
```

S104 IS ANSWER AFFIRMATIVE?

**S105** — UPDATE ESTIMATED AMOUNT α SO THAT INDEXES THAT INCLUDE TARGET FEATURE FOR QUESTIONING WITHIN TOP δ RANKS ARE GIVEN PREFERENCE

**S106** — UPDATE ESTIMATED AMOUNT α SO THAT INDEXES THAT DO NOT INCLUDE TARGET FEATURE FOR QUESTIONING WITHIN TOP δ RANKS ARE GIVEN PREFERENCE

**S107** — IS USER SATISFIED? NO

YES → END

# FIG.8

Europäisches
Patentamt

European
Patent Office

Office européen
des brevets

# EUROPEAN SEARCH REPORT

Application Number

EP 22 21 0764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AHN YONGSU ET AL: "FairSight: Visual Analytics for Fairness in Decision Making", IEEE TRANSACTIONS ON VISUALIZATION AND COMPUTER GRAPHICS, IEEE, USA, vol. 26, no. 1, 1 January 2020 (2020-01-01), pages 1086-1095, XP011752638, ISSN: 1077-2626, DOI: 10.1109/TVCG.2019.2934262 [retrieved on 2019-11-22] * paragraphs [03.2], [4.2.2], [4.2.3], [0007] * ----- | 1-12 | INV. G06N20/00 G06N5/045 |

TECHNICAL FIELDS
SEARCHED        (IPC)

G06N

The present search report has been drawn up for all claims

| Place of search | Date of completion of the search | Examiner |
|---|---|---|
| The Hague | 16 March 2023 | Falco, Gabriele |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................
& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016536691 A
- JP 2017220238 A
- US 20180336271
- US 20190188585
- JP 2019169147 A